Europäisches Patentamt

European Patent Office

Office européen des brevets

(19)

(11) Veröffentlichungsnummer: **0 004 682**
A1

(12) **EUROPÄISCHE PATENTANMELDUNG**

(21) Anmeldenummer: 79200136.4

(22) Anmeldetag: 21.03.79

(51) Int. Cl.²: **B 05 B 1/34**
F 28 F 25/06, F 16 L 55/02

(30) Priorität: 03.04.78 DE 2814246

(43) Veröffentlichungstag der Anmeldung:
17.10.79 Patentblatt 79/21

(84) Benannte Vertragsstaaten:
BE CH DE FR GB IT LU NL SE

(71) Anmelder: METALLGESELLSCHAFT Aktiengesellschaft
Reuterweg 14
D-6000 Frankfurt am Main 1(DE)

(72) Erfinder: Nöller, Herbert
Ascherstrasse 77
D-6457 Maintal 1(DE)

(74) Vertreter: Fischer, Ernst, Dr.
Reuterweg 14
D-6000 Frankfurt am Main 1(DE)

(54) Rücklaufdüse.

(57) Bei sogenannten Rücklaufdüsen, wie sie zur Verbesserung der Abscheideleistung von Elektrofiltern in vorgeschalteten Verdampfungskühlern eingesetzt werden, tritt im Betrieb oft eine unerträgliche Geräuschbelästigung auf, insbesondere dann, wenn die Verdampfungskühler aus wirtschaftlichen Gründen ohne Wärmeisolation ausgeführt werden.

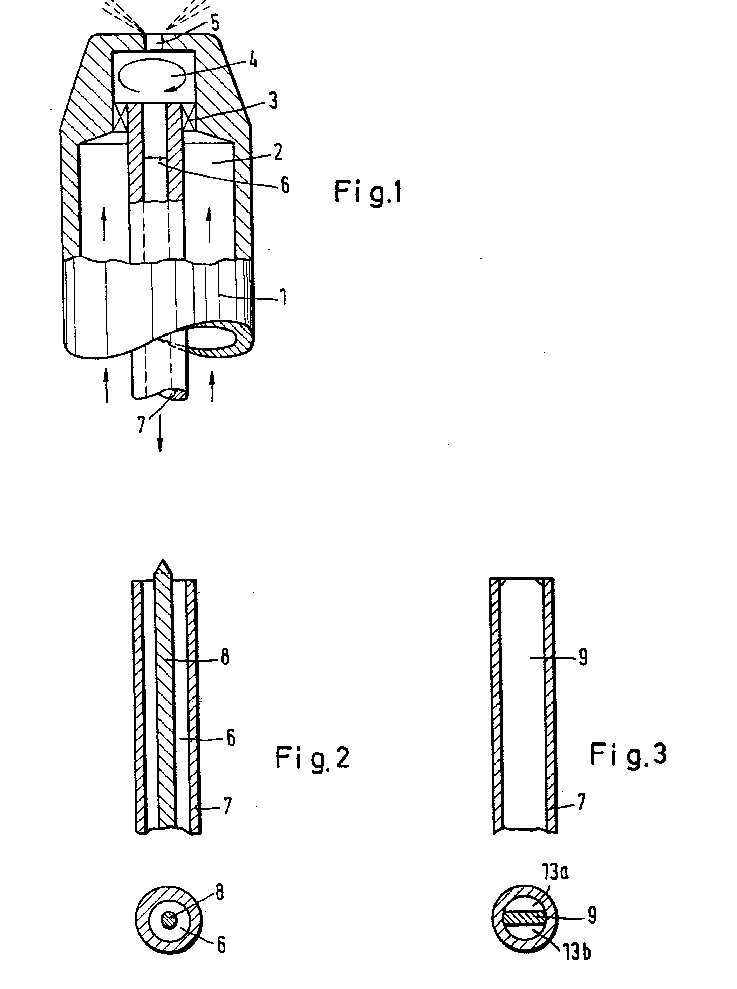

Es wurde erkannt, daß die Geräuschentwicklung dadurch entsteht, daß mit dem rotierenden Rücklaufstrom Gas angesaugt und dadurch die Rücklaufdüse in Schwingungen versetzt wird. Zur Unterdrückung der Geräuschentwicklung werden in dem Rücklaufkanal (7) der Rücklaufdüse Einbauten (9) vorgesehen, durch die der Drall in der Rücklaufströmung abgebaut und/oder das Einsaugen von Gas vermieden wird. (Fig. 3).

Fig.3

EP 0 004 682 A1

A 6559

- 1 -

METALLGESELLSCHAFT AG          Ffm., 8.03.1979
Reuterweg 14                   MLK/OKU

6000 Frankfurt/Main 1

P 28 14 246.3

## RÜCKLAUFDÜSE

Die Erfindung betrifft eine Rücklaufdüse, bestehend
im wesentlichen aus einem ringförmigen Vorlaufkanal,
einem Drallkörper, einem Düsenvorraum mit Düsenbohrung und Rücklaufbohrung sowie einem zentrisch angeordneten Rücklaufkanal.

Derartige Rücklaufdüsen werden in Verdampfungskühlern
eingesetzt, die häufig zur Verbesserung der Abscheideleistung von Elektrofiltern diesen vorgeschaltet sind.
Durch Feinverdüsung von Wasser (oder anderen geeigneten
Flüssigkeiten) wird die Gastemperatur herabgesetzt und
der Taupunkt erhöht. Die eingedüste Wassermenge muß u.a.

- 2 -

0004682

in Abhängigkeit vom Gasdurchsatz, von der Gaseintrittstemperatur und vom Staubgehalt geregelt werden, um am Eintritt in den Elektrofilter konstante bzw. optimale Bedingungen zu erreichen. Meist wird eine Vielzahl von Düsen eingesetzt, die durch gemeinsame Ringleitungen für den Vor- und Rücklauf miteinander verbunden sind.

Die Rücklaufdüsen werden insbesondere wegen ihrer günstigen Regelcharakteristik und wegen des geringen erforderlichen Aufwandes an Regeleinrichtungen eingesetzt. Von einer Pumpe, die mit konstanter Leistung läuft, werden die Rücklaufdüsen über die Ringleitung mit einer gleichbleibenden Wassermenge versorgt. Das zuströmende Wasser gelangt über den ringförmigen Vorlaufkanal und den Drallkörper in den Düsenvorraum, wo es als rotierender Strom an der Außenwand des Vorraums anliegt. Von hier aus kann es entweder über die Düsenbohrung oder über die Rücklaufbohrung abfließen. Wird das in der Rücklaufleitung angeordnete Regelglied weiter geschlossen, baut sich im Rücklaufkanal bis in die Rücklaufbohrung ein höherer Druck auf, wodurch die über die Düsenbohrung abfließende und nach Austritt verdüste Wassermenge vergrößert wird. Umgekehrt kann durch ein Öffnen des Regelgliedes die verdüste Wassermenge verringert werden, weil ein größerer Teil durch die Rücklaufbohrung abfließen kann.

Es hat sich nun herausgestellt, daß bei der Verwendung derartiger Rücklaufdüsen je nach Stellung des Regelgliedes, also je nachdem wieviel des zugeführten Wassers verdüst bzw. wieviel zurückgefördert wird, von den Rücklaufdüsen akustische Schwingungen ausgehen und durch Übertragen auf die Wandungsteile des Verdampfungskühlers erheblich

0004682

verstärkt zu einer unerträglichen Geräuschbelästigung führen können. Derartige Beobachtungen wurden insbesondere an Verdampfungskühlern gemacht, bei denen aus wirtschaftlichen Gründen auf eine thermische Isolation verzichtet und deswegen die Geräuschentwicklung nicht gedämpft wurde. Der Schallpegel hat teilweise über 100 dB(B) betragen, so daß Schalldämmungsmaßnahmen unerläßlich waren. Letztere sind jedoch wegen der Größe der Verdampfungskühler mit erheblichem Aufwand verbunden, wodurch die mit ihrem Einsatz anderweitig erreichten wirtschaftlichen Vorteile weitgehend aufgehoben werden.

Es besteht somit die Aufgabe, eine Rücklaufdüse insbesondere für den Einsatz in Verdampfungskühlern zu konzipieren, bei der mit einfachen und wirtschaftlich tragbaren Mitteln eine Geräuschentwicklung über den gesamten Regelbereich unterdrückt, zumindest aber im Hauptarbeitsbereich der Schallpegel innerhalb zulässiger Grenzen bleibt.

Zur Lösung dieser Aufgabe wird vorgeschlagen, bei der eingangs beschriebenen Rücklaufdüse im Rücklaufkanal Einbauten vorzusehen, durch die der Drall in der Rücklaufströmung abgebaut und/oder das Einsaugen von Gas in den Rücklaufkanal vermieden wird.

Verschiedene Ausführungsformen des Erfindungsgedankens sind in den Unteransprüchen beschrieben.

Bei systematischen Untersuchungen an Rücklaufdüsen wurde festgestellt, daß die Geräuschentwicklung offenbar dadurch verursacht wird, daß je nach Stellung des Regelgliedes im Düsenvorraum und im Rücklaufkanal infolge der Rotation des Wasserstroms im Zentrum des Dralls ein wasserfreier Raum entsteht, in den Gas eingesaugt und ebenfalls in Rotation versetzt wird. Die rotierende Gassäule regt die Rücklaufdüse zu Schwingungen an, die - wie gesagt - durch Übertragung und Resonanz zu einer Geräuschbelästigung führen können. Diese Zusammenhänge wurden erkannt, nachdem durch Einbauten gemäß der Erfindung der zentrale Teil der Rücklaufbohrung bzw. des Rücklaufkanals durch feste Einbauten ausgefüllt und überraschenderweise die Geräuschentwicklung in einigen Fällen völlig unterdrückt, stets jedoch wesentlich herabgesetzt werden konnte.

Weitere Einzelheiten und Vorteile der Erfindung werden anhand der in den Figuren dargestellten Ausführungsbeispiele näher erläutert:

Figur 1 zeigt eine Rücklaufdüse im Schnitt.

Figur 2 zeigt den Rücklaufkanal mit einem stabförmigen Einbau.

Figur 3 zeigt einen Rücklaufkanal mit einer ebenen Teilungswand.

Figur 4 .zeigt einen Rücklaufkanal mit einer schraubenförmigen Teilungswand.

Figur 5 zeigt einen Rücklaufkanal mit zwei senkrecht aufeinanderstehenden Wänden.

Figur 6 zeigt einen Rücklaufkanal mit mehreren Parallelwänden.

0004682

Figur 7 zeigt einen Rücklaufkanal, bestehend aus mehreren Einzelbohrungen.

Die Rücklaufdüse 1 gemäß Figur 1 besitzt einen ringförmigen Vorlaufkanal 2, durch den Wasser in Pfeilrichtung zugeführt wird. Im Übergang vom Vorlaufkanal 2 zum Düsenvorraum 4 ist ein Drallkörper 3 eingebaut, durch den der Wasserstrom in Rotation versetzt wird. Infolge dieser Rotation wird der Wasserstrahl nach Austritt aus der Düsenbohrung 5 kegelförmig abgesprüht und verdüst. Der nicht verdüste Teil des Wasserstroms wird durch den Rücklaufkanal 7 mit der Rücklaufbohrung 6 zum Vorratstank zurückgeführt. Das Verhältnis von verdüster zu rückgeführter Wassermenge wird - wie bereits erwähnt - durch die Stellung des in der Rücklaufleitung angeordneten Regelgliedes bestimmt.

In Figur 2 ist ein Rücklaufkanal 7 im Längs- und Querschnitt dargestellt, wobei die Rücklaufbohrung 6 im Zentrum durch einen zylindrischen Stab 8 ausgefüllt ist. Um gleiche Regelverhältnisse zu erreichen muß dafür gesorgt werden, daß der verbleibende Ringquerschnitt der Rücklaufbohrung 6 noch ebenso groß ist, wie bei einem Rücklaufkanal ohne Einbauten.

Bei dem Rücklaufkanal 7 gemäß Figur 3 ist eine ebene Teilungswand 9 eingebaut, wodurch die Rücklaufbohrung in zwei halbkreisförmige Querschnitte 13a und 13b unterteilt wird.

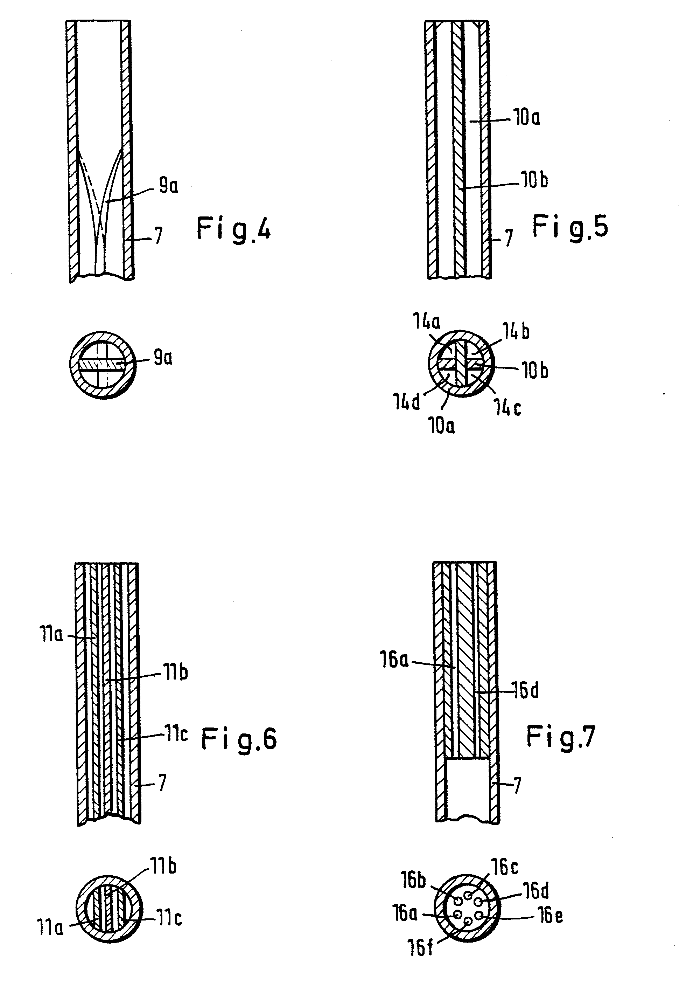

Bei dem Rücklaufkanal 7 gemäß Figur 4 ist eine schraubenförmig gewundene Teilungswand 9a vorgesehen, die zur Verstärkung des Drallabbaus in Gegendrallrichtung gewunden ist.

- 6 -

0004682

Bei der Ausführungsform gemäß Figur 5 sind im Rücklaufkanal 7 zwei senkrecht aufeinanderstehende ebene Wände 10a und 10b eingebaut, die die Rücklaufbohrung in viertelkreisförmige Teilquerschnitte 14a bis 14c unterteilt.

Nach einer weiteren Ausführungsform gemäß Figur 6 können die Einbauten aus mehreren ebenen, parallel zueinander angeordneten Wänden 11a bis 11c bestehen, wodurch entsprechende Teilquerschnitte 15a bis 15d im Rücklaufkanal 7 gebildet werden.

Nach einer weiteren Ausführungsform gemäß Figur 7 kann auch ein Einsatz 16 vorgesehen werden, der eine Anzahl von Längsbohrungen 16a bis 16f zur Unterteilung des Rücklaufstromes und zum Abbau des Dralls enthält. In diesem Fall sind die Bohrungen im Einsatz 16 kreisförmig angeordnet. Selbstverständlich sind auch andere Anordnungen der Bohrungen möglich.

Bei der Gestaltung der Einbauten ist in jedem Fall darauf zu achten, daß der Rücklaufquerschnitt insgesamt ebenso groß ist wie bei einer Rücklaufdüse gleicher Leistung, die keine Einbauten enthält, um das Regelverhalten nicht zu beeinträchtigen.

Durch die Vielzahl der möglichen Einbauten, ist es in jedem Anwendungsfall möglich, die Geräuschentwicklung zu unterdrücken oder auf ein nicht mehr störendes Maß herabzusetzen.

Dabei sind weitere, dem Fachmann ohne weiteres geläufige Varianten möglich, etwa dadurch, daß die Trennwände mehr oder weniger lang ausgebildet werden oder daß die Ein-

- 7 -

0004682

bauten gegenüber der Vorderkante der Rücklaufbohrung
vorragend oder zurückgesetzt angeordnet werden. In
jedem Fall muß gewährleistet sein, daß der Drall in
der Rücklaufströmung abgebaut und dadurch das Ansaugen
von Gas in die Rücklaufleitung vermieden wird.

PATENTANSPRÜCHE

1. Rücklaufdüse, insbesondere für den Einsatz in Verdampfungskühlern, bestehend im wesentlichen aus einem ringförmigen Vorlaufkanal, einem Drallkörper, einem Düsenvorraum mit Düsenbohrung und Rücklaufbohrung, sowie einem zentrisch angeordneten Rücklaufkanal, dadurch gekennzeichnet, daß der Rücklaufkanal (7) im Bereich der Rücklaufbohrung (6) Einbauten (8, 9, 10, 11) aufweist, durch die der Drall in der Rücklaufströmung abgebaut und/oder das Einsaugen von Gas vermieden wird.

2. Rücklaufdüse nach Anspruch 1, dadurch gekennzeichnet, daß der Rücklaufkanal (7) im Bereich der Rücklaufbohrung (6) durch einen im Querschnitt kreisförmigen, zentral angeordneten Stab (8) ausgefüllt ist und daß der verbleibende kreisringförmige Rücklaufquerschnitt (12) im wesentlichen die gleiche Größe aufweist, wie bei einer Rücklaufdüse ohne Einbauten.

3. Rücklaufdüse nach Anspruch 1, dadurch gekennzeichnet, daß der Rücklaufkanal (7) im Bereich der Rücklaufbohrung (6) durch eine Wand (9) in zwei halbkreisförmige Kanäle (13a, b) unterteilt ist, deren Gesamtquerschnitt einer Rücklaufdüse ohne Einbauten entspricht.

4. Rücklaufdüse nach Anspruch 3, dadurch gekennzeichnet, daß die Wand (9) in Gegendrallrichtung schraubenförmig ausgebildet ist.

0004682

5. Rücklaufdüse nach Anspruch 1, dadurch gekennzeichnet, daß der Rücklaufkanal (7) im Bereich der Rücklaufbohrung (6) durch zwei senkrecht aufeinanderstehende Wände (10a, b) in viertelkreisförmige Kanäle (14 a bis 14 d) unterteilt ist, deren Gesamtquerschnitt einer Rücklaufdüse ohne Einbauten entspricht.

6. Rücklaufdüse nach Anspruch 5, dadurch gekennzeichnet, daß die Wände (10a, b) in Gegendrallrichtung schraubenförmig ausgebildet sind.

7. Rücklaufdüse nach Anspruch 1, dadurch gekennzeichnet, daß der Rücklaufkanal (7) im Bereich der Rücklaufbohrung (6) durch mehrere, parallel zueinander angeordnete Wände (11 a, b, c) unterteilt ist und daß der Gesamtquerschnitt der entstehenden Teilkanäle (15 a bis 15 d) einer Rücklaufdüse ohne Einbauten entspricht.

8. Rücklaufdüse, dadurch gekennzeichnet, daß anstelle einer einzigen Rücklaufbohrung mehrere Rücklaufbohrungen (16 a bis 16 f) mit gleichem Gesamtquerschnitt vorgesehen sind.

9. Rücklaufdüse nach Anspruch 8, dadurch gekennzeichnet, daß die Rücklaufbohrungen (16 a bis 16 f) auf einem Kreisring (17) angeordnet sind.

A 6559

0004682

Fig.1

Fig.2

Fig.3

Fig.4

9a

7

Fig.5

10a

10b

7

9a

14a    14b

10b

14d    14c

10a

Fig.6

11a

11b

11c

7

Fig.7

16a

16d

7

11b

11a    11c

16b    16c

16d

16a    16e

16f

# Europäisches Patentamt
# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 913 222 (GEBRUEDER SULZER AG)<br><br>* Seite 2, Zeilen 81-90; Figur 5 *<br><br>-- | 1,2 |
| | GB - A - 997 781 (INT. COMBUSTION LTD.)<br><br>* Insgesamt *<br><br>-- | 1,2 |
| | DE - C - 380 935 (E.H. PEABODY)<br>* Insgesamt *<br><br>-- | 1 |
| | FR - A - 1 245 748 (WESTAFLEX - FRANCE)<br><br>* Insgesamt *<br><br>-- | 3 |
| | FR - A - 2 374 582 (FRIERRICH GROHE ARMATURENFABRIK)<br><br>* Seite 2, Zeilen 16-36; Figuren 1-3 *<br><br>-- | 5 |
| A | US - A - 3 692 245 (NEEDHAM)<br>* Figur 10 *<br><br>-- | 1 |
| A | GB - A - 809 676 (DRAKE AND FLETCHER)<br><br>* Figuren 1,2 *<br><br>-- | 1 |

./.

### KLASSIFIKATION DER ANMELDUNG (Int.Cl.³)

B 05 B  1/34
F 28 F 25/06
F 16 L 55/02

### RECHERCHIERTE SACHGEBIETE (Int. Cl.³)

B 05 B
F 28 F
F 15 L
F 23 D

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-06-1979 | COLPAERT |

EPA form 1503.1  06.78

| | Europäisches Patentamt | **EUROPÄISCHER RECHERCHENBERICHT** |

| **EINSCHLÄGIGE DOKUMENTE** | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | FR - A - 1 518 630 (WARTSILA) <br> * Insgesamt * <br><br> -- | 1 | |
| A | DE - A - 1 698 139 (FRIED. KRUPP GmbH) <br> * Insgesamt * <br><br> ---- | 1 | RECHERCHIERTE SACHGEBIETE (Int. Cl.²) |

EPA Form 1503.2  06.78